# FASCICULE DE BREVET EUROPEEN

(11) **EP 3 992 075 B1**
(45) Date de publication et mention de la délivrance du brevet: **13.12.2023**
(21) Numéro de dépôt: 21197249.2
(22) Date de dépôt: 16.09.2021
(51) Int. Cl.: B64C 1/12

(54) **FUSELAGE D'AÉRONEF CONFIGURÉ POUR OFFRIR AUX PASSAGERS UNE VUE TOTALEMENT PANORAMIQUE DE L'EXTÉRIEUR**
FLUGZEUGRUMPF, DER SO KONFIGURIERT IST, DASS ER DEN PASSAGIEREN EINEN VOLLSTÄNDIGEN PANORAMABLICK NACH AUSSEN BIETET
AIRCRAFT FUSELAGE CONFIGURED TO OFFER PASSENGERS A COMPLETELY PANORAMIC VIEW OF THE OUTSIDE

(30) Priorité: 02.11.2020 CH 14022020
(43) Date de publication de la demande: 04.05.2022
(73) Titulaire: Projets et Réalisations Sàrl, 3960 Sierre (CH)
(72) Inventeur: CATTIN, Jean-François, 3960 Sierre (CH)
(74) Mandataire: Germain Maureau

(56) Documents cités:
- FR-A1- 3 089 947
- KR-A- 20110 045 856
- US-A- 3 643 899

## Description

L'invention concerne de manière générale un aéronef offrant une vue panoramique de l'environnement extérieur aux passagers assis à l'intérieur de l'aéronef.

Elle concerne plus spécifiquement un fuselage d'aéronef configuré pour offrir aux passagers une vue totalement panoramique de l'extérieur.

Les aéronefs sont généralement équipés de fenêtres ou hublots dans les cabines des passagers de manière à permettre aux passagers de voir à l'extérieur de l'aéronef. Toutefois, ces hublots sont généralement de taille réduite en raison des contraintes structurelles. La petite taille des hublots peut limiter la visibilité à l'extérieur de l'aéronef, ce qui peut constituer un inconvénient majeur dans le cas où l'aéronef est destiné à survoler des sites touristiques réputés afin d'offrir aux passagers la possibilité d'observer ces sites dans les meilleures conditions possibles. De tels aéronefs ont notamment été décrits dans les documents US 3643 899, FR 3 089 947 et KR 2011 0045856.

Afin de résoudre ce problème, les cabines de passager sont actuellement équipées d'écrans vidéo sur lesquels peuvent être projetées les images capturées par des caméras positionnées et orientées de manière à visualiser une zone à l'extérieur de l'aéronef. Toutefois, ces écrans étant également de petite taille, les passagers peuvent ressentir une certaine insatisfaction à observer l'extérieur de l'aéronef au travers de ces écrans uniquement au lieu de l'observer directement au travers des hublots. Par ailleurs, les caméras installées étant en nombre limitée, il n'est pas toujours possible de couvrir un champ de vision totalement panoramique autour de l'aéronef.

L'invention vise donc à remédier aux inconvénients de l'art antérieur.

A cet effet, l'invention a pour objet un fuselage d'aéronef selon la revendication 1.

Ainsi configuré, le fuselage de l'invention permet d'offrir une vue totalement panoramique aux passagers de l'aéronef du fait de la transparence de l'élément formant peau constituant la paroi externe dudit fuselage. Par ailleurs, cet élément formant peau étant distant de la structure porteuse, le champ de vision des passagers s'en trouvera également accru.

Selon d'autres caractéristiques, le fuselage de l'invention comporte une ou plusieurs des caractéristiques optionnelles suivantes seules ou selon toutes combinaisons possibles :
- la structure porteuse comprend une pluralité de sections en forme de couronne, chacune desdites sections étant formée d'au moins deux éléments formant cadre adjacents, reliés ensemble au moyen d'une pluralité d'éléments de jonction en forme de triangle, chaque élément de jonction possédant deux extrémités solidaires chacune d'un desdits au moins deux éléments formant cadre et une troisième extrémité qui est solidaire d'un cadre intermédiaire disposé coaxialement auxdits au moins deux éléments formant cadre.
- l'élément formant peau comprend une enveloppe de base sur laquelle sont reliées par des éléments de charnière plusieurs parties mobiles formant portes d'accès.
- chaque partie mobile est positionnée entre deux sections en forme de couronne adjacentes le long de la direction axiale.
- la structure porteuse est formé d'un assemblage de tubes sensiblement droits reliés ensemble au niveau de leurs extrémités respectives, ledit assemblage formant une structure en treillis.
- les tubes de la structure porteuse sont constitués d'un matériau choisi parmi l'aluminium, le titane, ou un matériau composite à base de fibres de carbone.
- les tubes de la structure porteuse sont revêtus extérieurement d'une couche de vernis ou de peinture de couleur noire, ladite couche permettant d'éviter une réflexion de la lumière en direction de l'élément formant peau.
- l'élément formant peau est constitué de plexiglas.

Selon un autre aspect, l'invention concerne un aéronef comprenant un fuselage tel que défini précédemment.

Dans une configuration avantageuse de l'invention, l'aéronef comprend une paire d'ailes avant et une paire d'ailes arrière, les ailes avant, respectivement arrière, étant contiguës et alignées dans un plan parallèle à la direction axiale définie par le fuselage.

Dans une autre configuration avantageuse de l'invention, les ailes avant, respectivement arrière, sont disposées à l'aplomb d'une extrémité avant, respectivement arrière, du fuselage

L'invention sera davantage comprise à la lecture de la description non limitative qui va suivre, faite en référence aux figures ci-annexées.
- La figure 1 est une vue de face en perspective d'un aéronef selon un mode de réalisation de l'invention.
- La figure 2 est une vue de côté en perspective de l'aéronef de la figure 1.
- La figure 3 est une vue en perspective de la structure porteuse du fuselage équipant l'aéronef de la figure 1.
- La figure 4 et une vue de face de la structure porteuse représentée sur la figure 3.
- La figure 5 est une vue en perspective d'une section du fuselage équipant l'aéronef de la figure 1.
- La figure 6 est une vue agrandie d'une partie de la section représentée sur la figure 5.
- La figure 7 est une vue agrandie d'un détail de structure de la section représentée sur la figure 5.
- La figure 8 est une vue agrandie d'un élément de fixation utilisé pour fixer l'élément formant peau sur la structure porteuse.

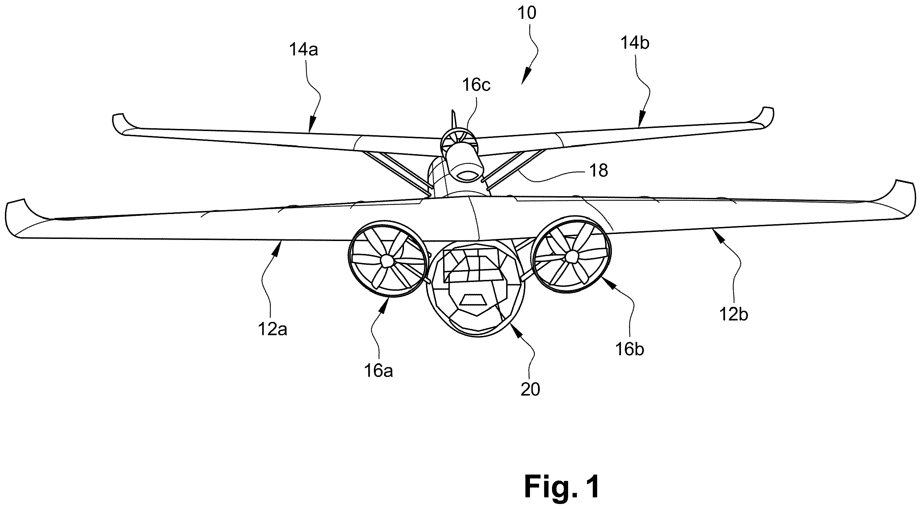

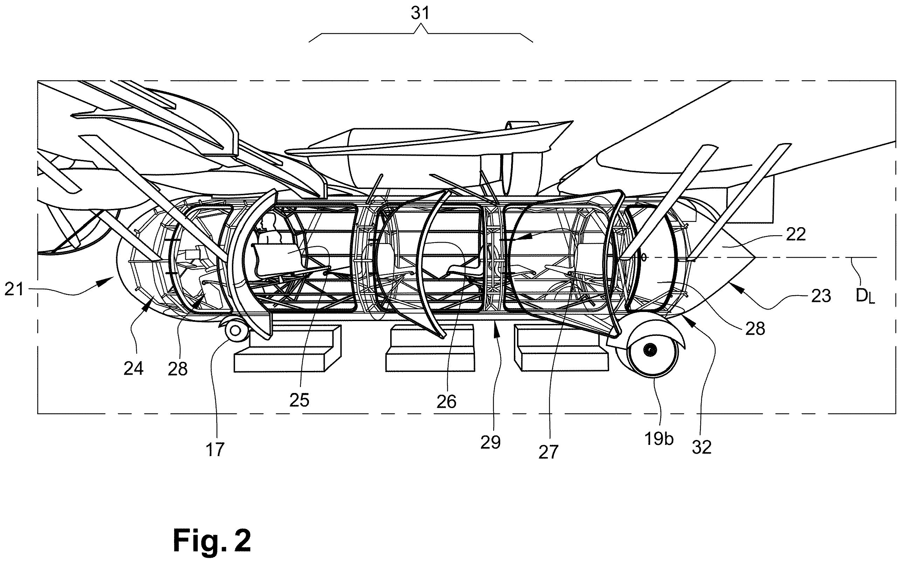

Comme illustré sur les figures 1 et 2, un aéronef 10 selon un mode particulier de réalisation de l'invention comprend un fuselage 20 qui s'étend d'une extrémité avant 21 jusqu'à une extrémité arrière 23 le long d'une direction axiale DL qui constitue un axe de symétrie pour le fuselage 20. Dans le mode de réalisation représenté, le fuselage 20 possède une forme générale tubulaire fermée à l'avant par une surface hémisphérique et à l'arrière par une surface conique. L'aéronef 10 est équipé d'une roue centrale avant 17 et de deux roues arrière, respectivement gauche 19a et droite 19b, de sorte que l'aéronef 10 peut se déplacer en roulant sur le sol avant son décollage et après son attérissage. Le déplacement de l'aéronef 10 pourra s'opérer au moyen d'une paire d'hélices avant, respectivement gauche 16a et droite 16b, et d'une hélice arrière centrale 16c mues en rotation au moyen de moteurs. Une paire d'ailes avant, respectivement gauche 12a et droite 12b, et une paire d'ailes arrière, respectivement gauche 14a et droite 14b, sont reliées au fuselage 20 par l'intermédiaire de haubans 18. Dans chacune des paires, les ailes gauche et droite 12a, 12b et 14a, 14b sont contiguës et alignées dans un plan parallèle à la direction DL de sorte que les ailes sont sensiblement horizontales lorsque les roues avant et arrière 17, 19a et 19b reposent sur une surface plane horizontale. Les ailes avant 12a, 12b, respectivement arrière 14a, 14b, sont avantageusement disposées à l'aplomb de l'extrémité avant 21, respectivement arrière 23, du fuselage 20 de sorte qu'elles libèrent un espace 31 au-dessus d'une partie centrale du fuselage 20 dans laquelle sont disposées les cabines des passagers. De cette façon, et comme décrit plus en détail plus loin, les passagers bénéficient d'un champ de vision plus large que dans un aéronef conventionnel. Le fuselage 20 comprend un élément formant peau 22 et une structure porteuse 24 en treillis supportant l'élément formant peau 22. L'élément formant peau 22 est avantageusement constitué d'un matériau transparent, de préférence en matière synthétique d'une grande rigidité et résistante aux chocs, comme le plexiglas par exemple, de sorte que l'équipage assis dans le cockpit défini par une partie avant du fuselage 20 jouxtant l'extrémité avant 21, ainsi que les passagers assis dans les cabines de passagers, bénéficient d'un champ de vision totalement panoramique de l'environnement extérieur. L'élément formant peau 22 pourra notamment posséder une épaisseur comprise entre 3 et 10 mm.

Comme illustré sur la figure 2, les passagers pourront accéder aux cabines de passagers au travers de portes d'accès 26 et l'équipage pourra accéder au cockpit au travers de portes d'accès 28. Ces portes d'accès 26, 28 sont formées par des parties mobiles du fuselage 20 qui sont reliées au moyens d'éléments de charnière 27 à une enveloppe de base 29 de ce fuselage 20, ladite enveloppe 29 étant fixe par rapport à la structure porteuse 24. Pour le confort des passagers, il est par ailleurs prévu d'équiper l'aéronef 10 de sièges 25, qui pourront être fixés sur la structure porteuse 24 à l'intérieur de l'espace intérieur défini par l'élément formant peau 22, ainsi que d'un plancher 32.

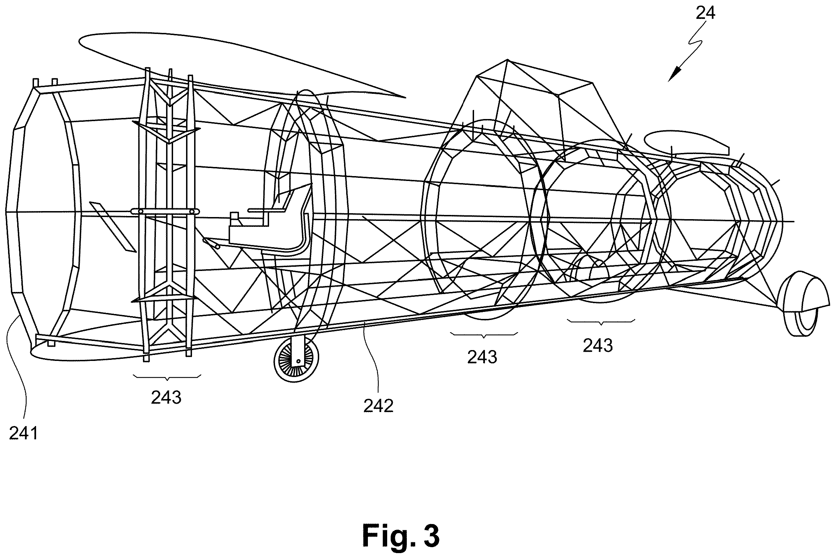

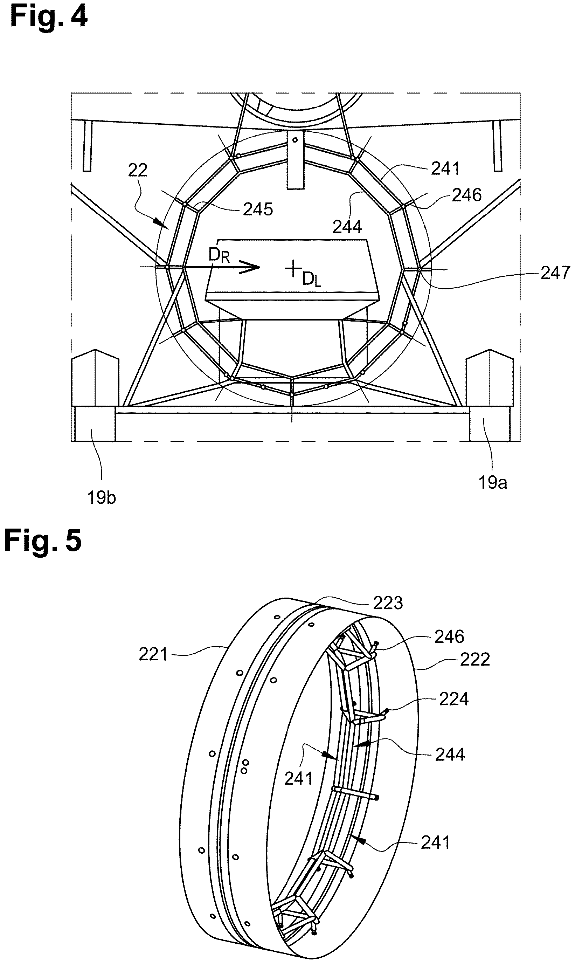

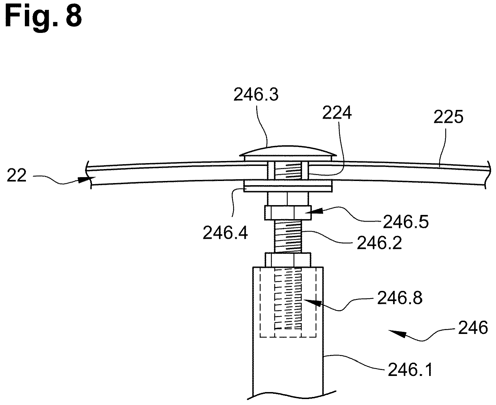

En référence aux figures 3 et 4, il est représenté la structure porteuse 24 supportant l'élément formant peau 22. Cette structure porteuse 24 est formée d'un assemblage de tubes sensiblement droits reliés ensemble au niveau de leurs extrémités respectives, ledit assemblage formant une structure en treillis. Ces tubes pourront avantageusement être constitués d'un matériau léger choisi notamment parmi l'aluminium, le titane, ou un matériau composite à base de fibres de carbone, permettant ainsi de diminuer sensiblement le poids du fuselage 20. La structure porteuse 24 comprend notamment une pluralité d'éléments formant longeron 242 agencés parallèlement à la direction axiale DL et une pluralité d'éléments formant cadre 241 disposés de manière espacée le long de ladite direction DL, chaque élément formant cadre 241 étant agencé de manière sensiblement perpendiculaire auxdits éléments formant longeron 242. Comme illustré sur la figure 4, chaque élément formant cadre 241 possède un périmètre extérieur de forme polygonale comportant plusieurs sommets 247. L'élément formant peau 22 est fixé sur le périmètre extérieur de chaque élément formant cadre 241 au moyen d'éléments de fixation 246. Comme représenté sur les figures 4, 7 et 8, chaque élément de fixation 246 comprend un corps tubulaire 246.1 orienté selon une direction radiale DR centrée sur la direction axiale DL, ledit corps tubulaire 246.1 comprenant une première extrémité 246.6 qui est solidaire d'un des éléments formant cadre 241 au niveau d'un des sommets 247 dudit élément formant cadre 241, et d'une deuxième extrémité 246.7 qui est munie d'un filetage interne 246.8 dans lequel vient se visser un boulon 246.5 munie d'une tige filetée 246.2 et d'une tête 246.3, ledit boulon 246.5 traversant, au niveau de sa tige filetée 246.2, une ouverture 224 pratiquée dans l'élément formant peau 22 et appuyant sur une face externe 226 dudit élément formant peau 22 au niveau de sa tête 246.3. Ainsi configurés, les éléments de fixation 246 permettent de maintenir l'élément formant peau 22 à distance du périmètre extérieur des éléments formant cadre 241.

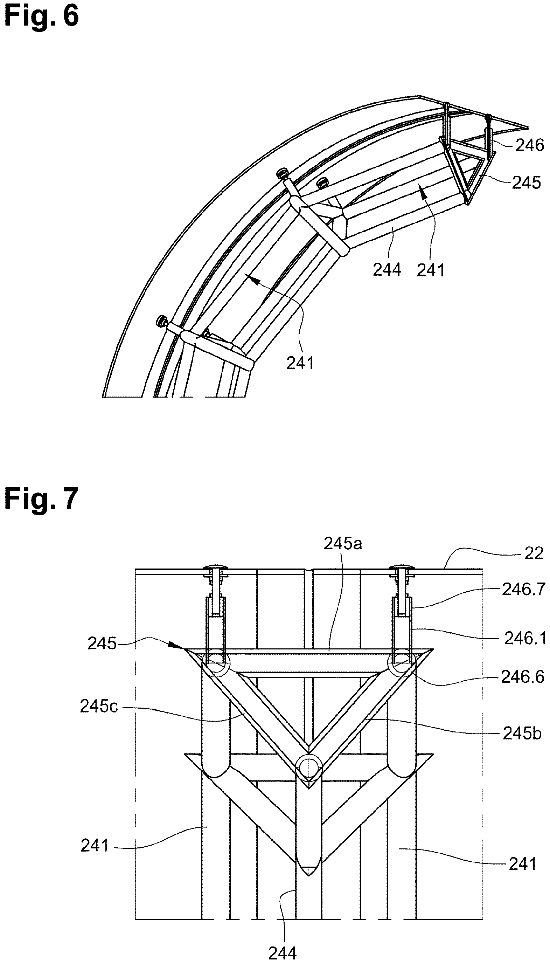

Comme illustré sur la figure 3, la structure porteuse 24 comprend avantageusement une pluralité de sections 243 en forme de couronne, espacés le long de la direction axiale DL. Comme représenté sur les figures 5 et 6, chacune des sections 243 est formée d'au moins deux éléments formant cadre 241 adjacents, reliés ensemble au moyen d'une pluralité d'éléments de jonction 245 en forme de triangle, les éléments de jonction 245 étant disposés dans le prolongement des éléments de fixation 246. Chaque élément de jonction 245 est formé d'un tube longitudinal 245a orienté parallèlement à la direction DL et de deux tubes obliques 245b, 245c orientés obliquement par rapport à ce tube longitudinal 245a, les tubes 245a, 245b, 245c de chacun des éléments de jonction 245 étant alignés dans un plan radial centré sur la direction axiale DL. Le tube longitudinal 245a est solidaire respectivement à chacune de ses extrémités à l'un des deux éléments formant cadre 241 adjacents et les deux tubes obliques 245b, 245c sont solidaires respectivement à l'une de leurs extrémités au tube longitudinal 245a et à l'autre extrémité à un cadre intermédiaire 244 disposé coaxialement aux deux éléments formant cadre 241 adjacents.

Comme illustré sur la figure 5, l'élément formant peau 22 pourra être constitué de la jonction de plusieurs pièces contiguës 221, 222 reliées entre elles par un joint de dilatation 223 transparent. Ce joint de dilatation 223 permettra d'absorber les déformations thermiques et mécaniques subies par les pièces 221, 222. Une membrane transparente réfléchissante pourra par ailleurs recouvrir partiellement ou totalement l'élément formant peau 22 en fonction des conditions des latitudes.

## Revendications

1. Fuselage (20) d'aéronef comprenant un élément formant peau (22) et une structure porteuse (24) supportant ledit élément formant peau (22), ladite structure porteuse (24) comprenant une pluralité d'éléments formant longeron (242) agencés parallèlement à une direction axiale (DL) définie par le fuselage (20) et une pluralité d'éléments formant cadre (241) disposés de manière espacée le long de ladite direction axiale (DL), chaque élément formant cadre (241) étant agencé de manière sensiblement perpendiculaire auxdits éléments formant longeron (242), dans lequel l'élément formant peau (22) est fixé sur un périmètre extérieur de chaque élément formant cadre (241) au moyen d'éléments de fixation (246) configurés pour maintenir l'élément formant peau (22) à distance dudit périmètre extérieur et dans laquelle l'élément formant peau (22) est constitué d'un matériau transparent, chaque élément formant cadre (241) possédant une forme polygonale comportant plusieurs sommets (247),
**caractérisé en ce que**
chaque élément de fixation (246) comprend un corps tubulaire (246.1) comprenant une première extrémité (246.6) qui est solidaire d'un des éléments formant cadre (241) au niveau d'un des sommets (247) dudit élément formant cadre (241), et d'une deuxième extrémité (246.7) qui est munie d'un filetage interne (246.8) dans lequel vient se visser un boulon (246.5) munie d'une tige filetée (246.2) et d'une tête (246.3), ledit boulon (246.5) traversant une ouverture (224) pratiquée dans l'élément formant peau (22) au niveau de sa tige filetée (246.2) et appuyant sur une face externe (225) dudit élément formant peau (22) au niveau de sa tête (246.3).

2. Fuselage (20) selon la revendication 1 **caractérisé en ce que** la structure porteuse (24) comprend une pluralité de sections (243) en forme de couronne, chacune desdites sections (243) étant formée d'au moins deux éléments formant cadre (241) adjacents, reliés ensemble au moyen d'une pluralité d'éléments de jonction (245) en forme de triangle, chaque élément de jonction (245) possédant deux extrémités solidaires chacune d'un desdits au moins deux éléments formant cadre (241) et une troisième extrémité qui est solidaire d'un cadre intermédiaire (244) disposé coaxialement auxdits au moins deux éléments formant cadre (241).

3. Fuselage (20) selon la revendication 2, **caractérisé en ce que** l'élément formant peau (22) comprend une enveloppe de base (29) sur laquelle sont reliées par des éléments de charnière (27) plusieurs parties mobiles (26, 28) formant portes d'accès.

4. Fuselage (20) selon la revendication 3, **caractérisé en ce que** chaque partie mobile (26, 28) est positionnée entre deux sections (243) en forme de couronne adjacentes le long de la direction axiale (DL).

5. Fuselage (20) selon l'une des revendications précédentes, **caractérisé en ce que** la structure porteuse (24) est formé d'un assemblage de tubes sensiblement droits reliés ensemble au niveau de leurs extrémités respectives, ledit assemblage formant une structure en treillis.

6. Fuselage (20) selon la revendication 5, **caractérisé en ce que** les tubes de la structure porteuse (24) sont constitués d'un matériau choisi parmi l'aluminium, le titane, ou un matériau composite à base de fibres de carbone.

7. Fuselage (20) selon la revendication 5 ou 6, **caractérisé en ce que** les tubes de la structure porteuse (24) sont revêtus extérieurement d'une couche de vernis ou de peinture de couleur noire, ladite couche permettant d'éviter une réflexion de la lumière en direction de l'élément formant peau (22).

8. Fuselage (20) selon l'une des revendications précédentes, **caractérisé en ce que** l'élément formant peau (22) est constitué de plexiglas.

9. Aéronef (10) comprenant un fuselage (20) selon l'une des revendications précédentes.

10. Aéronef (10) selon la revendication 9, **caractérisé en ce qu'**il comprend une paire d'ailes avant (12a, 12b) et une paire d'ailes arrière (14a, 14b), les ailes avant (12a, 12b), respectivement arrière (14a, 14b), étant contiguës et alignées dans un plan parallèle à la direction axiale (DL) définie par le fuselage (20).

11. Aéronef (10) selon la revendication 10, **caractérisé en ce que** les ailes avant (12a, 12b), respectivement arrière (14a, 14b), sont disposées à l'aplomb d'une extrémité avant (21), respectivement arrière (23), du fuselage (20).

## Patentansprüche

1. Flugzeugrumpf (20), das ein die Haut bildendes Element (22) und eine lasttragende Struktur (24), die das die Haut bildende Element (22) trägt, umfasst, wobei die lasttragende Struktur (24) eine Vielzahl von den Holm bildenden Elementen (242), die parallel zur einer durch den Rumpf (20) definierten axialen Richtung (DL) angeordnet sind, und eine Vielzahl von den Rahmen bildenden Elementen (241), die derart angeordnet sind, dass sie in der axialen Richtung (DL) beabstandet sind, umfasst, wobei jedes den Rahmen bildende Element (241) derart angeordnet ist, dass es im Wesentlichen senkrecht zu den den Holm bildenden Elementen (241) verläuft, wobei das die Haut bildende Element (22) an einem Außenumfang jedes den Rahmen bildenden Elements (241) mittels Befestigungselementen (246) befestigt ist, die dazu konfiguriert sind, das die haut bildende Element (22) auf Abstand von dem Außenumfang zu halten, und wobei das die Haut bildende Element (22) aus einem transparenten Material hergestellt wird, wobei jedes den Rahmen bildende Element (241) eine polygonale Form mit mehreren Scheitelpunkten (247) aufweist,
**dadurch gekennzeichnet, dass**
jedes Befestigungselement (246) einen rohrförmigen Körper (246.1) umfasst, der ein erstes Ende (246.6), das an einem der den Rahmen bildenden Elemente (241) auf einer Höhe eines der Scheitelpunkte (247) des den Rahmen bildenden Elements (241) angebracht ist, und ein zweites Ende (246.7) umfasst, das mit einem Innengewinde (246.8) versehen ist, in das ein mit einer Gewindestange (246.2) und einem Kopf (246.3) versehener Bolzen (246.5) eingeschraubt wird, wobei der Bolzen (246.5) eine Öffnung (224) durchquert, die in dem die Haut bildenden Element (22) auf Höhe seiner Gewindestange (246.2) gebildet ist und auf einer Außenfläche (225) des die Haut bildenden Elements (22) auf Höhe seines Kopfes (246.3) aufliegt.

2. Rumpf (20) nach Anspruch 1, **dadurch gekennzeichnet, dass** die lasttragende Struktur (24) eine Vielzahl von kronenförmigen Abschnitten (243) umfasst, wobei jeder der Abschnitte durch mindestens zwei benachbarte, den Rahmen bildende Elemente (241) gebildet wird, die durch eine Vielzahl von dreieckförmigen Verbindungselementen (245) miteinander verbunden sind, wobei jedes Verbindungselement (245) zwei Enden aufweist, die jeweils an einem der mindestens zwei den Rahmen bildenden Elemente (241) befestigt sind, und ein drittes Ende, das an einem Zwischenrahmen (244) befestigt ist, der koaxial mit mindestens zwei benachbarten, den Rahmen bildenden Elementen (241) angeordnet ist.

3. Rumpf (20) nach Anspruch 2, **dadurch gekennzeichnet, dass** das die Haut bildende Element (22) eine Basishülle (29) umfasst, über der mehrere bewegliche Teile (26, 28), die Zugangstüren bilden, durch Scharnierelemente (27) verbunden sind.

4. Rumpf (20) nach Anspruch 3, **dadurch gekennzeichnet, dass** jeder bewegliche Teil (26, 28) zwischen zwei benachbarten kronenförmigen Abschnitten (243) in der axialen Richtung (DL) angeordnet ist.

5. Rumpf (20) nach einem der vorhergehenden Ansprüche, **dadurch gekennzeichnet, dass** die lasttragende Struktur (24) durch eine Anordnung von im Wesentlichen geraden Rohren gebildet wird, die in Höhe ihrer jeweiligen Enden miteinander verbunden sind, wobei die Anordnung eine Gitterstruktur bildet.

6. Rumpf (20) nach Anspruch 5, **dadurch gekennzeichnet, dass** die Rohre der lasttragenden Struktur (24) aus einem Material hergestellt sind, das aus Aluminium, Titan oder einem kohlenstofffaserverstärkten Verbundmaterial ausgewählt wird.

7. Rumpf (20) nach Anspruch 5 oder 6, **dadurch gekennzeichnet, dass** die Rohre der lasttragenden Struktur (24) außen mit einer schwarz gefärbten Lack- oder Farbschicht beschichtet ist, wobei die Schicht es ermöglicht, eine Reflexion von Licht in Richtung des die Haut bildenden Elements (22) zu vermeiden.

8. Rumpf (20) nach einem der vorhergehenden Ansprüche, **dadurch gekennzeichnet, dass** das die Haut bildende Element (22) aus Plexiglas hergestellt ist.

9. Flugzeug (10), das einen Rumpf (20) nach einem der vorhergehenden Ansprüche umfasst.

10. Flugzeug (10) nach Anspruch 9, **dadurch gekennzeichnet, dass** es ein Paar vordere Flügel (12a, 12b) und ein Paar hintere Flügel (14a, 14b) umfasst, wobei die vorderen (12a, 12b) bzw. die hinteren Flügel (14a, 14b) aneinandergrenzen und in einer Ebene parallel zu der durch den Rumpf (20) definierten axialen Richtung (DL) ausgerichtet sind.

11. Flugzeug (10) nach Anspruch 10, **dadurch gekennzeichnet, dass** die vorderen (12a, 12b) bzw. die hinteren Flügel (14a, 14b) über einem vorderen (21) bzw. hinteren Ende (23) des Rumpfes (20) angeordnet sind.

## Claims

1. An aircraft fuselage (20) comprising a skin element (22) and a support structure (24) supporting said skin element (22), said support structure (24) comprising a plurality of spar elements (242) arranged parallel to an axial direction (DL) defined by the fuselage (20) and a plurality of frame elements (241) arranged in a spaced manner along said axial direction (DL), each frame element (241) being arranged substantially perpendicular to said spar elements (242), wherein the skin element (22) is fastened to an external perimeter of each frame element (241) by means of fastening elements (246) configured to hold the skin element (22) spaced from said external perimeter and wherein the skin element (22) is made of a transparent material, each frame element (241) having a polygonal shape including multiple vertices (247), **characterized in that** each fastening element (246) comprises a tubular body (246.1) comprising a first end (246.6) which is secured to one of the elements forming a frame (241) at the level of one of the vertices (247) of said frame element (241), and a second end (246.7) which is provided with an inner thread (246.8) into which a bolt (246.5) provided with a threaded rod (246.2) and a head (246.3) is screwed, said bolt (246.5) passing through an opening (224) made in the skin element (22) at the level of its threaded rod (246.2) and pressing on an outer face (225) of said skin element (22) at the level of its head (246.3).

2. The fuselage (20) according to claim 1, **characterized in that** the support structure (24) comprises a plurality of sections (243) in a crown shape, each of said sections (243) being formed of at least two adjacent frame elements (241), connected together by means of a plurality of junction elements (245) in a triangle shape, each junction element (245) having two ends each secured to one of said at least two frame elements (241) and a third end which is secured to an intermediate frame (244) arranged coaxially with said at least two frame elements (241).

3. The fuselage (20) according to claim 2, **characterized in that** the skin element (22) comprises a base casing (29) on which several movable parts (26, 28) forming access doors are connected by hinge elements (27).

4. The fuselage (20) according to claim 3, **characterized in that** each movable part (26, 28) is positioned between two adjacent crown-shaped sections (243) along the axial direction (DL).

5. The fuselage (20) according to any of the preceding claims, **characterized in that** the support structure (24) is formed of an assembly of substantially straight tubes connected together at their respective ends, said assembly forming a lattice structure.

6. The fuselage (20) according to claim 5, **characterized in that** the tubes of the support structure (24) consist of a material selected among aluminum, titanium, or a carbon fibers based-composite material.

7. The fuselage (20) according to claim 5 or 6, **characterized in that** the tubes of the support structure (24) are externally coated with a layer of varnish or black paint, said layer making it possible to avoid a reflection of the light towards the skin element (22).

8. The fuselage (20) according to any of the preceding claims, **characterized in that** the skin element (22) consists of Plexiglas.

9. An aircraft (10) comprising a fuselage (20) according to any of the preceding claims.

10. The aircraft (10) according to claim 9, **characterized in that** it comprises a pair of front wings (12a, 12b) and a pair of rear wings (14a, 14b), the front (12a, 12b), respectively rear (14a, 14b) wings, being contiguous and aligned in a plane parallel to the axial direction (DL) defined by the fuselage (20).

11. The aircraft (10) according to claim 10, **characterized in that** the front (12a, 12b), respectively rear (14a, 14b) wings, are arranged in line with a front (21), respectively rear (23) end of the fuselage (20).
